# EUROPEAN PATENT SPECIFICATION

(11) **EP 4 170 790 B1**
(45) Date of publication and mention of the grant of the patent: **23.07.2025**
(21) Application number: 21203840.0
(22) Date of filing: 21.10.2021
(51) Int. Cl.: H01M 50/213, H01M 10/48, H01M 50/503, H01M 50/569

(54) **BATTERY SYSTEM COMPRISING CYLINDRICAL CELLS AND A TEMPERATURE SENSOR AND METHOD OF INSTALLING THE SAME**
BATTERIESYSTEM MIT ZYLINDRISCHEN ZELLEN UND TEMPERATURSENSOR UND VERFAHREN ZUR INSTALLATION DAVON
SYSTÈME DE BATTERIE COMPRENANT DES CELLULES CYLINDRIQUES ET UN CAPTEUR DE TEMPÉRATURE ET SON PROCÉDÉ D'INSTALLATION

(43) Date of publication of application: 26.04.2023
(73) Proprietor: Samsung SDI Co., Ltd., Yongin-si, Gyeonggi-do 17084 (KR)
(72) Inventor: Hadler, Bernhard, 8073 Feldkirchen/Graz (AT); Ridisser, Markus, 8141 Premstätten (AT)
(74) Representative: Gulde & Partner

(56) References cited:
- US-A1- 2012 251 849
- US-A1- 2019 296 407
- US-B1- 6 410 184
- US-B2- 9 373 832

## Description

### Field of the Disclosure

The present disclosure relates to a battery system comprising a battery pack including a plurality of cylindrical battery cells, and a temperature sensor for sensing the temperature of at least one of the battery cells. The disclosure further relates to a method for installing a temperature sensor in such a battery pack.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened.

It is therefore of importance to monitor the internal temperature of the battery pack so as to be able to determine whether the battery cells work in the intended temperature range or whether they overheat and so as to be able to react accordingly. Temperature sensors for measuring the temperature of cylindrical batteries are known from e.g. US 2019/296407 A1 and US 9,373,832 B2.

US 2019/296407 A1 is concerned with a battery pack with cylindrical battery cells, the battery pack comprising a multiple-zone temperature monitoring system including temperature probes that are electrically connected to a BMS via circuit substrates extending along a top side of the battery pack. The temperature probes extend downward from these circuit substrates into clearances in between neighbouring batteries and are held in place via a structural material or adhesive which is inserted into the clearance and cured. Such a construction, in particular the fixation of the temperature probes, is complex to install.

US 9,373,832 B2 discloses pairs of battery cells comprising a temperature detection member that is pressed against the outer surface of one of the two cylindrical battery cells by a pressing rib of a temperature detection member mounting part. While such an installation of a temperature sensor is less complex it is unsuited for a larger battery pack comprising an array of many cylindrical battery cells.

US 2012/251849 A1 describes a battery pack comprising cylindrical cells and a protection circuit module positioned at an outside of the cells and electrically connected to the cells, and a temperature measurement device provided with a temperature sensing portion, the temperature sensing portion being positioned in a space formed between outer circumferential surfaces of neighboring cells and fixed to the cells via an insulation tape.

It is an object of the invention to provide a constructively less complex battery system, in particular a battery system comprising a constructively simple temperature sensor arrangement, and a less complex method of installing a temperature sensor in a battery system.

### Summary of Invention

The invention is defined by the appended claims. The description that follows is subjected to this limitation. Any disclosure lying outside the scope of said claims is only intended for illustrative as well as comparative purposes.

The invention pertains to a battery system according to claim 1, comprising a battery pack including a plurality of cylindrical battery cells arranged in an array with clearances between neighboring battery cells, an electrical conductor element having a main portion extending along a surface of the battery pack and at least one branch portion branching off of the main portion and comprising at least one temperature sensor for sensing the temperature of at least one of the battery cells, the branch portion with the temperature sensor extending into one of the clearances between the battery cells, the battery system further comprising a pin element inserted into the same clearance such that it presses the temperature sensor against at least one of the battery cells.

The invention further pertains to a method for installing at least one temperature sensor in a battery pack comprising a plurality of cylindrical battery cells, cells according to claim 9, wherein the method comprises the steps of:
a) providing a battery pack including a plurality of cylindrical battery cells arranged in an array with clearances between neighboring battery cells;
b) arranging a main portion of an electrical conductor element along a surface of the battery pack;
c) inserting at least one branch portion of the electrical conductor element branching off of the main portion and comprising a temperature sensor for sensing the temperature of at least one of the battery cells into one of the clearances between the battery cells;
d) inserting a pin element into the same clearance such that it presses the temperature sensor against at least one of the battery cells

With the method according to the invention a temperature sensor may be installed in a battery pack to achieve a battery system according to the invention. Thus, the battery system according to the invention may be produced via the method. In the following, the battery system and the method as well as embodiments thereof will be explained. Explanations given for the battery system apply to the method as well and vice versa.

The cylindrical battery cells are arranged in an array, i.e. in a regular fashion in rows and columns of cells, preferably in a space-saving manner. However, due to the cylindrical form of the battery cells clearances remain between neighboring cells, in particular between cells of neighboring rows. For example, the battery pack may comprise multiple rows of cylindrical battery cells, every second row being offset from the first rows by approximately half of the diameter of one of the cells. This way a clearance is delimited by three cells. The array may comprise more than two cells, in particular at least three cells. According to the invention, at least one temperature sensor is inserted into at least one of such clearances. Multiple temperature sensors may be arranged inside one of the clearances, e.g. at different depths. Also, multiple of the clearances may be provided with one or more temperature sensors.

According to the invention, the at least one temperature sensor is connected to an electrical conductor element, the electrical conductor element providing an electrical connection between the temperature sensor and e.g. a BMS so that the BMS can be provided with temperature values determined by the temperature sensor. This allows for a determination and monitoring of the internal temperature(s) of the battery pack. The at least one temperature sensor is arranged at a branch portion of the electrical conductor element, the branch portion branching off from a main portion of the electrical conductor element into one of the clearances. The main portion extends along a surface of the battery pack, or, in other words, along an end side of the battery cells. In a mounting position of the battery system inside an electric vehicle the surface may in particular be the upper surface of the battery pack, i.e the top side of the cells. The electrical conductor element may further serve as an electrical connection of one or more of the battery cells to the BMS. When installing the temperature sensor, the main portion of the electrical conductor element is placed on the surface of the battery pack. According to the invention, the branch portion with the temperature sensor is inserted into the clearance via the pin element as will be explained in detail below.

Thanks to the branch portion the temperature sensor extends far enough into the clearance to allow for a meaningful temperature measurement. In particular, the temperature sensor may be arranged at the branch portion such that the temperature sensor, in the inserted position, is arranged at or close to the hottest spot of the respective battery cell. The temperature sensor may be arranged at a free end of the branch portion. According to the invention, the pin element inserted into the clearance acts on the at least one temperature sensor such that the pin element presses the at least one temperature sensor against at least one of the cells that delimit the clearance. The at least one temperature sensor is fixed in its position in the respective clearance via the pin element that presses the sensor against at least one of the battery cells. The pin element allows for a simple and reliable fixation of the temperature sensor inside the clearance. As the pin element presses the sensor against the outer cylindrical surface of the cell, a sufficient heat transfer is achieved from the cell to the sensor. Thus, a reliable temperature measurement may be performed.

The pin element is a separate element, i.e. separate from the temperature sensor and also from the remaining parts of the battery system, e.g. from the electrical conductor element. The pin element is comprised of an electrically non-conductive material. The branch portion with the temperature sensor is inserted into the clearance via the pin element. Thus, steps c) and d) are performed in conjunction. The pin element is adapted to press the at least one temperature sensor against at least one of the cells delimiting the clearance. In particular, the pin element may be adapted to be deformed, in particular elastically deformed, by adjacent/neighboring battery cells when inserted into the clearance. This way the pin element may press the temperature sensor against the at least one battery cell. The pin element may comprise a pin head and a pin insertion portion extending essentially vertically from the pin head, the pin insertion portion being inserted into the clearance and pressing the temperature sensor against the cell as explained.

The fixation of the temperature sensor in the clearance via the pin element is particularly simple as no further elements as e.g. an adhesive which needs to be cured is necessary. Nevertheless, a reliable or even improved temperature measurement may be achieved as the pin element presses the temperature sensor against at least one of the cells which temperature is to be measured.

The installation of the temperature sensor is particularly simple because, when inserting the pin element into the clearance, the pin element guides the branch portion and therefore the temperature sensor into the clearance. Thus, via insertion of the pin element the at least one branch portion is inserted into the clearance along with the temperature sensor. In other words, the pin element pushes the branch portion and thus the temperature sensor into the clearance. As mentioned above, steps c) and d) are thus performed at the same time with a single work step. Thus, regarding the battery system the pin element is adapted to guide the branch portion into the clearance when the pin element is inserted into the clearance. The pin element therefore comprises a guiding surface guiding the branch portion into the clearance when the pin element is inserted into the clearance. When inserting the pin element, the guiding surface serves as a driver taking the branch portion and therefore the temperature sensor along into the clearance. The guiding surface may be formed correspondingly to the branch portion, may e.g. have the same width. This aspect allows for a particularly simple installation because the insertion of the temperature sensor and the fixation of the same is achieved in a single step.

According to the invention, the pin element guides the branch portion into the clearance by bending the branch portion from an initial position in which the branch portion is arranged parallel to the main portion to a branched off position where the branch portion is branched off of the main portion. Accordingly, the branch portion is adapted to be bend by the pin element from an initial position in which the branch portion is arranged parallel to the main portion to a branched off position where the branch portion is branched off of the main portion into the clearance. In the branched off position the branch portion is no longer arranged parallel to the main portion, but is inclined thereto, at an angle of approx. 90 degrees.

Thus, in other words, the pin element branches off the branch portion of the electrical conductor element from the main portion of the electrical conductor element and may take along the branch portion along with the temperature sensor on its way into the clearance. Therefore, when arranging the main portion along the surface of the battery pack according to step b), the branch portion may be arranged along the surface of the battery pack as well. Subsequently, the branch portion is branched off/bend by the pin element and inserted into the clearance. This is particularly simple because it simplifies the electrical conductor element.

According to another aspect of the present disclosure, the electrical conductor element is a flexible electrical conductor element, in particular a flexible flat cable, comprising a plurality of isolated conducting lines, wherein the branch portion is formed by at least two of the isolated conducting lines which are connected to the at least one temperature sensor. The main portion may be formed by the remaining conducting lines of the plurality of isolated conducting lines. Thus, the electrical conductor element may in particular be a flexible flat cable that is arranged at the surface of the battery pack and comprises one or more temperature sensors and connects these temperature sensors to a BMS. When inserting the pin element(s) the conducting lines supplying the respective temperature sensors may be separated by the pin element from the remaining conducting lines so that the branch portion is branched off of the main portion, the branch portion with the temperature sensor thus being inserted into the clearing via the pin element.

According to another aspect of the present disclosure, the pin element comprises a pin head that fixes the electrical conductor element, in particular the main portion of the electrical conductor element, to the surface of the battery pack/battery cells. As mentioned above, the pin element may comprise a pin head and a pin insertion portion extending essentially vertically from the pin head, the pin insertion portion being inserted into the clearance and pressing the temperature sensor against the cell as explained. The pin head may hold down in particular the main portion which is arranged at the surface of the battery pack by pressing the main portion in a planar manner against the surface of the battery pack. Thus, the pin element may serve not only as a fixation means for the branch portion inside the clearance but also as a fixation means for the main portion. The pin element providing such a double function is particularly efficient and simplifies the installation. In particular, one might omit any further fixation means for the electrical conductor element.

According to another aspect of the present disclosure, the pin element is made of plastic so as to be non-conductive. The complete pin element, i.e. the pin head and the pin insertion portion, may be of a plastic material.

According to another aspect of the present disclosure, the pin element is deformed by the neighboring battery cells delimiting the clearance. In particular, the pin element may be elastically deformed. As the pin element is deformed it presses the at least one temperature sensor against at least one of the adjacent battery cells that delimit the clearance. According to respective aspect of the present disclosure, the pin element comprises elastic ribs which are orthogonally arranged to a longitudinal extension of the pin element, wherein the elastic ribs are adapted to be (elastically) deformed by neighboring battery cells when the pin element is inserted into the clearance. The elastic rips are arranged successively along the longitudinal extension of the pin element, i.e. along the pin insertion portion. When inserting the pin element, the elastic rips may be deformed in particular by all of the neighboring cells defining the clearance the pin is inserted into, the pin element thus contacting all of the neighboring cells. Such a pin element may be a so-called a pine tree pin. Such a pin element may hold the branch portion and the temperature sensor securely in the clearance.

According to another aspect of the present disclosure, the branch portion extends so far into the clearance that the temperature sensor is positioned approximately at half of the length of the cylindrical axis of the battery cell it is pressed against. Thus, the temperature sensor is arranged approximately at the middle of the battery cell with respect to its longitudinal extension which usually is the hottest spot of the cell. Here a meaningful temperature measurement may be performed.

The invention further pertains to an electric vehicle comprising a battery system as explained above.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates schematic perspective views of an electrical conductor element of a battery system according to an embodiment.
- Fig. 2: illustrates schematic perspective views of the electrical conductor element of Fig. 1 along with a pin element and a battery pack.
- Fig. 3: illustrates schematic view of a pin element according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

The use of "may" when describing embodiments of the present disclosure refers to "one or more embodiments of the present disclosure." In the following and the above description of embodiments of the present disclosure, the terms of a singular form may include plural forms unless the context clearly indicates otherwise. Expressions such as "at least one of," when preceding a list of elements, modify the entire list of elements and do not modify the individual elements of the list. As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof. It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

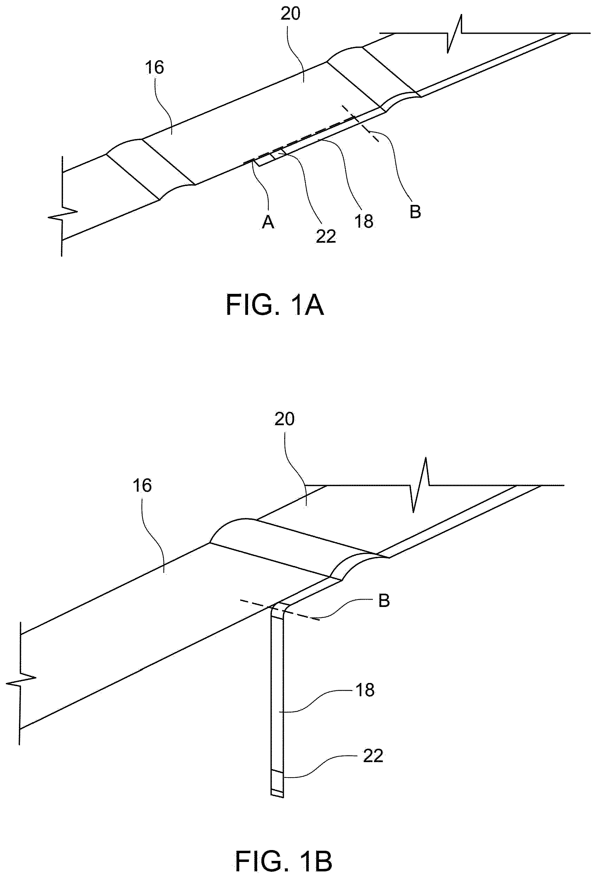

Fig. 1 a) and b) are schematic perspective views illustrating an electrical conductor element 20 which in this embodiment is a flexible flat cable, FFC, and comprises a plurality of isolated conducting lines (not shown) set jointly in an isolation material. The electrical conductor element 20 comprises a main portion 16 and at least one branch portion 18, wherein the branch portion 18 is formed by at least two of the plurality of isolated conducting lines which are connected to a temperature sensor 22 which is arranged at a free end of the branch portion 18.

Fig. 1 a) shows the branch portion 18 of the electrical conductor element 20 in an initial position before the temperature sensor 22 is installed at a battery pack. In this initial position, the branch portion 18 is arranged parallel to the main portion 16. Fig. 1 b) shows the branch portion 18 in a branched off position where the branch portion 18 is branched off of the main portion 16 and extends essentially vertically downward from the main portion 16. To achieve the branched off position the branch portion 18 has been parted from the main portion 16 along a parting line A and has been bent downward by approximately 90 degrees around a bending line B. By branching off the branch portion 18 the two conducting lines comprised in the branch portion 18 are separated from the main portion 16 by ripping apart the joint isolation at the parting line A.

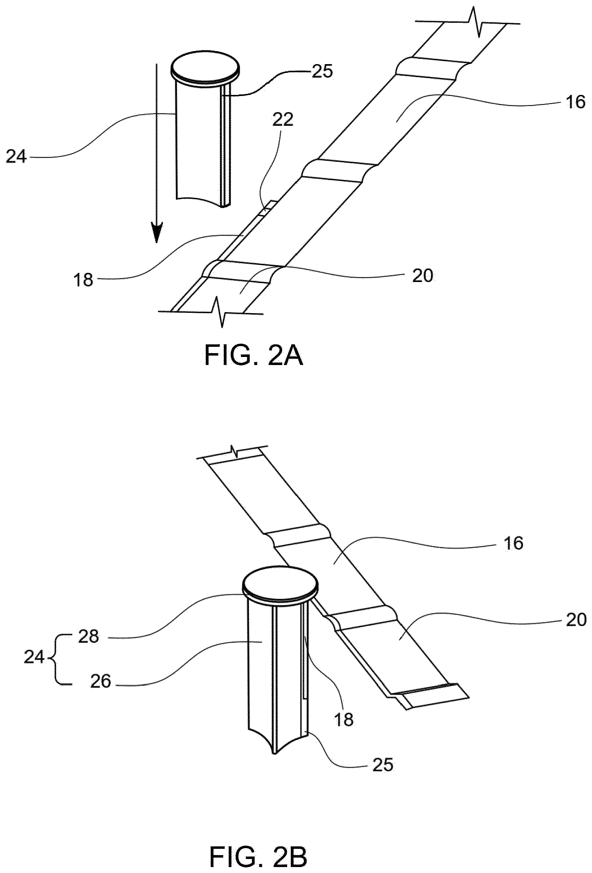

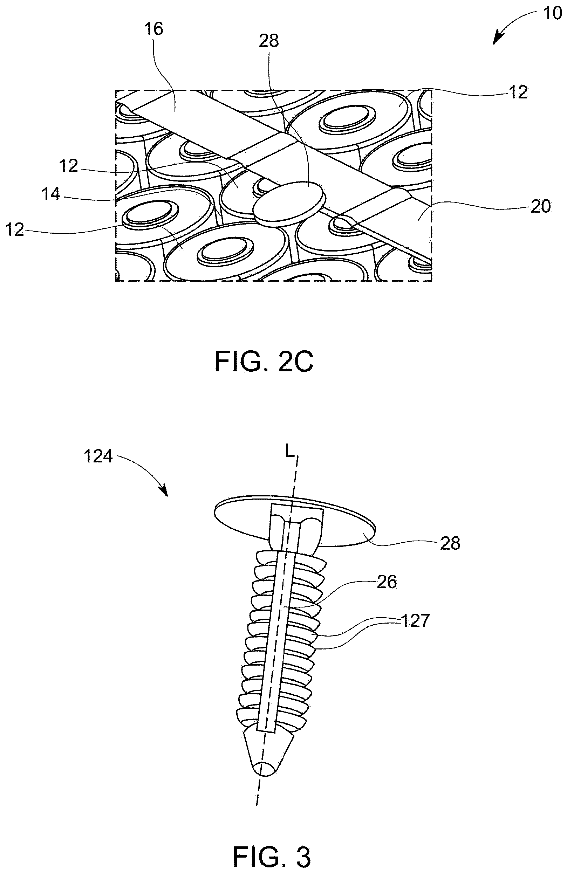

The branch portion 18 is moved from the initial position to the branched off position via a pin element 24 as can be seen in Fig. 2. At first, the electrical conductor element 20 is arranged at an upper surface of a battery pack 10, i.e. a top side of cylindrical battery cells 12 as shown in Fig. 2 c). In contrast to Fig. 2 c), the branch portion 18 is at first in the above-explained initial position which can be seen in Fig. 2 a). In a following step, the pin element 24 comprising a pin head 28 and a pin insertion portion 26 is inserted into a clearance 14 between neighboring battery cells 12 of the plurality of cylindrical battery cells 12. The pin element 24 separates the branch portion 18 from the main portion 16 of the electrical conductor element 20 and, via a guiding surface 25, takes along the branch portion 18 and thus the temperature sensor 22 attached thereto on its way into the clearance 14. In the branched off position, which can be seen in Figs. 2 b) and c), the branch portion 18 is bent downward from the main portion 16 and the temperature sensor 22 is being pressed by the pin insertion portion 26 of the pin element 24 against one of the battery cells 12 (the latter is not shown).

The pin element 24 allows for a simple and reliable fixation of the temperature sensor 22 inside the clearance 14. In particular, no further elements as e.g. an adhesive are necessary. As the pin element 24 presses the temperature sensor 22 against the outer cylindrical surface of one of the battery cells 12, a sufficient heat transfer is achieved from the battery cell 12 to the temperature sensor 22. Thus, a reliable temperature measurement may be performed.

The length of the branch portion 18 and the arrangement of the temperature sensor 22 on the branch portion 18 may be chosen such that the temperature sensor 22 extends far enough down into the clearance to be close to the hottest spot of the cell it is pressed against. In particular, the branch portion 18 may extend so far in the clearance 14 that the temperature sensor 22 is positioned approximately at half of the length of the cylindrical axis of the battery cell. At such a position a meaningful temperature can be measured.

Furthermore, the inserted pin element 24 via its pin head 28 fixes the electrical conductor element 20, in particular the main portion 16, to the surface of the battery pack 10, i.e. to the upper side of the battery cells 12, by holding/pressing the main portion 16 against the upper side/surface as can be seen in Fig. 2 c). Thus, the pin element 24 may fulfill a double function as fixation means not only for the branch portion 18 and thus the temperature sensor 22 inside the clearance but also for the main portion 16 on top of the battery cells 12.

Fig. 3 shows an alternative embodiment of a pin element 124 which may be used for the battery system explained above instead of the pin element 24.

The pin element 124 comprises elastic ribs 127 which are arranged successively along the longitudinal extension L of the pin element 124, i.e. along the pin insertion portion 26. The elastic ribs 127 extend orthogonally from the pin insertion portion 26 outwards and are adapted to be elastically deformed by neighboring battery cells when the pin element 124 is inserted into the clearance 14. Such a pin element is also called a pine tree pin. Such a pin element may hold the branch portion and the temperature sensor particularly secure in the clearance.

### Reference signs

- 10: battery pack
- 12: cylindrical battery cells
- 14: clearance(s)
- 16: main portion of electrical conductor element
- 18: branch portion of electrical conductor element
- 20: electrical conductor element
- 22: temperature sensor
- 24: pin element
- 25: guiding surface of pin element
- 26: pin insertion portion of pin element
- 28: pin head of pin element
- 124: pin element
- 127: elastic ribs
- A: parting line
- B: bending line
- L: longitudinal extension

## Claims

1. A battery system, comprising
a battery pack (10) including a plurality of cylindrical battery cells (12) arranged in an array with clearances (14) between neighboring battery cells (12),
an electrical conductor element (20) having a main portion (16) extending along an end side of the battery cells (12), and
at least one branch portion (18) branching off of the main portion (16) and comprising at least one temperature sensor (22) for sensing the temperature of at least one of the battery cells (12),
the branch portion (18) with the temperature sensor (22) extending into one of the clearances (14) between neighboring battery cells (12) of the plurality of battery cells (12),
the battery system further comprising a pin element (24, 124) separate from the temperature sensor (22) and from the remaining parts of the battery system, the pin element (24, 124) comprised of an electrically non-conductive material and inserted into the same clearance (14) such that it presses the temperature sensor (22) against at least one of the battery cells (12),
wherein the branch portion (18) is adapted to be bend by the pin element (24, 124) from an initial position in which the branch portion (18) is arranged parallel to the main portion (16) to a branched off position where the branch portion (18) is branched off of the main portion (16) into the clearance (14) at an angle of approximately 90 degrees with respect to the main portion (16),
wherein the pin element (24, 124) comprises a guiding surface (25) to guide the branch portion (18) into the clearance (14) when the pin element (24, 124) is inserted into the clearance (14).

2. The battery system according to claim 1, wherein the electrical conductor element (20) is a flexible electrical conductor element, in particular a flexible flat cable, comprising a plurality of isolated conducting lines, wherein the branch portion (18) is formed by at least two of the isolated conducting lines which are connected to the at least one temperature sensor (22).

3. The battery system according to any one of the preceding claims, wherein the pin element (24, 124) comprises a pin head (28) that fixes the electrical conductor element (20) to the surface of the battery pack (10).

4. The battery system according to any one of the preceding claims, wherein the pin element (24, 124) is made of plastic.

5. The battery system according to any one of the preceding claims, wherein the pin element (24, 124) is deformed by the neighboring battery cells (12) delimiting the clearance (14) when the pin element (124) is inserted into the clearance (14).

6. The battery system according to claim 5, wherein the pin element (124) comprises elastic ribs (127) which are orthogonally arranged to a longitudinal extension of the pin element (124), wherein the elastic ribs (127) are deformed by the neighboring battery cells (12) when the pin element (124) is inserted into the clearance (14).

7. The battery system according to any one of the preceding claims, wherein the branch portion (18) extends so far into the clearance (14) that the temperature sensor (22) is positioned approximately at half of the length of the cylindrical axis of the battery cell (12) it is pressed against.

8. An electric vehicle comprising the battery system according to any one of the preceding claims.

9. A method for installing at least one temperature sensor (22) in a battery pack (10) comprising a plurality of cylindrical battery cells (12), wherein the method comprises the steps of:
a) providing a battery pack (10) including a plurality of cylindrical battery cells (12) arranged in an array with clearances (14) between neighboring battery cells (12);
b) arranging a main portion (16) of an electrical conductor element (20) along an end side of the battery cells (12);
c) inserting at least one branch portion (18) of the electrical conductor element (20) branching off of the main portion (16) and comprising a temperature sensor (22) for sensing the temperature of at least one of the battery cells (12) into one of the clearances (14) between neighboring battery cells (12) of the plurality battery cells (12);
d) inserting a pin element (24, 124) into the same clearance (14) such that it presses the temperature sensor (22) against at least one of the battery cells (12), the pin element (24, 124) being separate from the temperature sensor (22) and from the remaining parts of the battery system, the pin element (24, 124) comprised of an electrically non-conductive material,
wherein when inserting the pin element (24, 124) into the clearance (14) the pin element (24, 124) guides the branch portion (18) and therefore the temperature sensor (22) via a guiding surface (25) of the pin element (24, 124) into the clearance (14), wherein the pin element (24, 124) guides the branch portion (18) into the clearance (14) by bending the branch portion (18) from an initial position in which the branch portion (18) is arranged parallel to the main portion (16) to a branched off position where the branch portion (18) is branched off of the main portion (16) at an angle of approximately 90 degrees with respect to the main portion (16).

## Patentansprüche

1. Batteriesystem, umfassend:
einen Batteriepack (10), aufweisend eine Mehrzahl von zylindrischen Batteriezellen (12), die in einer regelmäßigen Anordnung mit Zwischenräumen (14) zwischen benachbarten Batteriezellen (12) angeordnet sind,
ein elektrisches Leiterelement (20) mit einem Hauptabschnitt (16), der sich entlang einer Endseite der Batteriezellen (12) erstreckt, und
mindestens einen Zweigabschnitt (18), der von dem Hauptabschnitt (16) abzweigt und mindestens einen Temperatursensor (22) zum Abfühlen der Temperatur mindestens einer der Batteriezellen (12) umfasst,
wobei sich der Zweigabschnitt (18) mit dem Temperatursensor (22) in einen der Zwischenräume (14) zwischen benachbarten Batteriezellen (12) der Mehrzahl von Batteriezellen (12) hinein erstreckt,
wobei das Batteriesystem ferner ein Stiftelement (24, 124) umfasst, das von dem Temperatursensor (22) und von den restlichen Teilen des Batteriesystems getrennt ist, wobei das Stiftelement (24, 124) ein elektrisch nicht leitfähiges Material umfasst und derart in denselben Zwischenraum (14) eingeführt wird, dass es den Temperatursensor (22) an mindestens eine der Batteriezellen (12) presst,
wobei der Zweigabschnitt (18) dazu angepasst ist, durch das Stiftelement (24, 124) aus einer Ausgangsstellung, in der der Zweigabschnitt (18) parallel zu dem Hauptabschnitt (16) angeordnet ist, in eine abgezweigte Stellung, in der der Zweigabschnitt (18) von dem Hauptabschnitt (16) in den Zwischenraum (14) in einem Winkel von ungefähr 90 Grad bezüglich des Hauptabschnitts (16) abzweigt, gebogen zu werden,
wobei das Stiftelement (24, 124) eine Führungsfläche (25) zum Führen des Zweigabschnitts (18) in den Zwischenraum (14), wenn das Stiftelement (24, 124) in den Zwischenraum (14) eingeführt wird, umfasst.

2. Batteriesystem nach Anspruch 1, wobei das elektrische Leiterelement (20) ein flexibles elektrisches Leiterelement, insbesondere ein flexibles Flachkabel, ist, das eine Mehrzahl von getrennten Leitungen umfasst, wobei der Zweigabschnitt (18) durch mindestens zwei der getrennten Leitungen, die mit dem mindestens einen Temperatursensor (22) verbunden sind, gebildet wird.

3. Batteriesystem nach einem der vorangehenden Ansprüche, wobei das Stiftelement (24, 124) einen Stiftkopf (28) umfasst, der das elektrische Leiterelement (20) an der Oberfläche des Batteriepacks (10) befestigt.

4. Batteriesystem nach einem der vorangehenden Ansprüche, wobei das Stiftelement (24, 124) aus Kunststoff hergestellt ist.

5. Batteriesystem nach einem der vorangehenden Ansprüche, wobei das Stiftelement (24, 124) durch die benachbarten Batteriezellen (12) verformt wird, was den Zwischenraum (14) begrenzt, wenn das Stiftelement (124) in den Zwischenraum (14) eingeführt wird.

6. Batteriesystem nach Anspruch 5, wobei das Stiftelement (124) elastische Rippen (127) umfasst, die orthogonal zu einer Längsausdehnung des Stiftelements (124) angeordnet sind, wobei die elastischen Rippen (127) durch die benachbarten Batteriezellen (12) verformt werden, wenn das Stiftelement (124) in den Zwischenraum (14) eingeführt wird.

7. Batteriesystem nach einem der vorangehenden Ansprüche, wobei sich der Zweigabschnitt (18) so weit in den Zwischenraum (14) hinein erstreckt, dass der Temperatursensor (22) ungefähr auf halber Länge der Zylinderachse der Batteriezelle (12), an die er gepresst wird, positioniert ist.

8. Elektrofahrzeug, das das Batteriesystem nach einem der vorangehenden Ansprüche umfasst.

9. Verfahren zur Installation mindestens eines Temperatursensors (22) in einem Batteriepack (10), umfassend eine Mehrzahl von zylindrischen Batteriezellen (12), wobei das Verfahren die folgenden Schritte umfasst:
a) Bereitstellen eines Batteriepacks (10), aufweisend eine Mehrzahl von zylindrischen Batteriezellen (12), die in einer regelmäßigen Anordnung mit Zwischenräumen (14) zwischen benachbarten Batteriezellen (12) angeordnet sind;
b) Anordnen eines Hauptabschnitts (16) eines elektrischen Leiterelements (20) entlang einer Endseite der Batteriezellen (12);
c) Einführen mindestens eines Zweigabschnitts (18) des elektrischen Leiterelements (20), der von dem Hauptabschnitt (16) abzweigt und einen Temperatursensor (22) zum Abfühlen der Temperatur mindestens einer der Batteriezellen (12) umfasst, in einen der Zwischenräume (14) zwischen benachbarten Batteriezellen (12) der Mehrzahl von Batteriezellen (12);
d) Einführen eines Stiftelements (24, 124) in denselben Zwischenraum (14) derart, dass es den Temperatursensor (22) an mindestens eine der Batteriezellen (12) presst, wobei das Stiftelement (24, 124) von dem Temperatursensor (22) und von den restlichen Teilen des Batteriesystems getrennt ist, wobei das Stiftelement (24, 124) ein elektrisch nicht leitfähiges Material umfasst,
wobei, wenn das Stiftelement (24, 124) in den Zwischenraum (14) eingeführt wird, das Stiftelement (24, 124) den Zweigabschnitt (18) und daher den Temperatursensor (22) mittels einer Führungsfläche (25) des Stiftelements (24, 124) in den Zwischenraum (14) führt, wobei das Stiftelement (24, 124) den Zweigabschnitt (18) in den Zwischenraum (14) führt, indem es den Zweigabschnitt (18) aus einer Ausgangsstellung, in der der Zweigabschnitt (18) parallel zu dem Hauptabschnitt (16) angeordnet ist, in eine abgezweigte Stellung, in der der Zweigabschnitt (18) von dem Hauptabschnitt (16) in einem Winkel von ungefähr 90 Grad bezüglich des Hauptabschnitts (16) abzweigt, biegt.

## Revendications

1. Système de batterie, comportant :
un bloc-batterie (10) incluant une pluralité de cellules de batterie cylindriques (12) agencées en un réseau avec des espaces (14) entre des cellules de batterie (12) voisines,
un élément conducteur électrique (20) ayant une partie principale (16) s'étendant le long d'un côté d'extrémité des cellules de batterie (12), et
au moins une partie de ramification (18) se ramifiant à partir de la partie principale (16) et comportant au moins un capteur de température (22) pour détecter la température d'au moins l'une des cellules de batterie (12),
la partie de ramification (18) avec le capteur de température (22) s'étendant dans l'un des espaces (14) entre des cellules de batterie (12) voisines de la pluralité de cellules de batterie (12),
le système de batterie comportant en outre un élément goupille (24, 124) séparé du capteur de température (22) et des parties restantes du système de batterie, l'élément goupille (24, 124) comportant un matériau électriquement non conducteur et inséré dans le même espace (14) de façon à presser le capteur de température (22) contre au moins l'une des cellules de batterie (12),
dans lequel la partie de ramification (18) est adaptée pour être pliée par l'élément goupille (24, 124) d'une position initiale dans laquelle la partie de ramification (18) est agencée parallèlement à la partie principale (16) à une position ramifiée où la partie de ramification (18) est ramifiée à partir de la partie principale (16) dans l'espace (14) à un angle d'environ 90 degrés par rapport à la partie principale (16),
dans lequel l'élément goupille (24, 124) comporte une surface de guidage (25) pour guider la partie de ramification (18) dans l'espace (14) lorsque l'élément goupille (24, 124) est inséré dans l'espace (14).

2. Système de batterie selon la revendication 1, dans lequel l'élément conducteur électrique (20) est un élément conducteur électrique souple, en particulier un câble plat souple, comportant une pluralité de lignes conductrices isolées, dans lequel la partie de ramification (18) est formée par au moins deux des lignes conductrices isolées qui sont connectées à l'au moins un capteur de température (22).

3. Système de batterie selon l'une quelconque des revendications précédentes, dans lequel l'élément goupille (24, 124) comporte une tête de goupille (28) qui fixe l'élément conducteur électrique (20) à la surface du bloc-batterie (10).

4. Système de batterie selon l'une quelconque des revendications précédentes, dans lequel l'élément goupille (24, 124) est en plastique.

5. Système de batterie selon l'une quelconque des revendications précédentes, dans lequel l'élément goupille (24, 124) est déformé par les cellules de batterie (12) voisines délimitant l'espace (14) lorsque l'élément goupille (124) est inséré dans l'espace (14).

6. Système de batterie selon la revendication 5, dans lequel l'élément goupille (124) comporte des nervures élastiques (127) qui sont disposées orthogonalement à une extension longitudinale de l'élément goupille (124), dans lequel les nervures élastiques (127) sont déformées par les cellules de batterie (12) voisines lorsque l'élément goupille (124) est inséré dans l'espace (14).

7. Système de batterie selon l'une quelconque des revendications précédentes, dans lequel la partie de ramification (18) s'étend dans l'espace (14) de sorte que le capteur de température (22) soit positionné à environ la moitié de la longueur de l'axe cylindrique de la cellule de batterie (12) contre laquelle il est pressé.

8. Véhicule électrique comportant le système de batterie selon l'une quelconque des revendications précédentes.

9. Procédé d'installation d'au moins un capteur de température (22) dans un bloc-batterie (10) comportant une pluralité de cellules de batterie cylindriques (12), dans lequel le procédé comporte les étapes suivantes :
a) la fourniture d'un bloc-batterie (10) incluant une pluralité de cellules de batterie cylindriques (12) agencées en un réseau avec des espaces (14) entre des cellules de batterie (12) voisines ;
b) l'agencement d'une partie principale (16) d'un élément conducteur électrique (20) le long d'un côté d'extrémité des cellules de batterie (12) ;
c) l'insertion d'au moins une partie de ramification (18) de l'élément conducteur électrique (20) se ramifiant à partir de la partie principale (16) et comportant un capteur de température (22) pour détecter la température d'au moins l'une des cellules de batterie (12) dans l'un des espaces (14) entre des cellules de batterie (12) voisines de la pluralité de cellules de batterie (12) ;
d) l'insertion d'un élément goupille (24, 124) dans le même espace (14) de sorte qu'il presse le capteur de température (22) contre au moins l'une des cellules de batterie (12), l'élément goupille (24, 124) étant séparé du capteur de température (22) et des parties restantes du système de batterie, l'élément goupille (24, 124) comportant un matériau électriquement non conducteur,
dans lequel lors de l'insertion de l'élément goupille (24, 124) dans l'espace (14), l'élément goupille (24, 124) guide la partie de ramification (18) et donc le capteur de température (22) via une surface de guidage (25) de l'élément goupille (24, 124) dans l'espace (14), dans lequel l'élément goupille (24, 124) guide la partie de ramification (18) dans l'espace (14) en pliant la partie de ramification (18) d'une position initiale dans laquelle la partie de ramification (18) est agencée parallèlement à la partie principale (16) à une position ramifiée où la partie de ramification (18) est ramifiée à partir de la partie principale (16) à un angle d'environ 90 degrés par rapport à la partie principale (16).
